# EUROPÄISCHE PATENTSCHRIFT

(11) **EP 3 384 699 B1**
(45) Veröffentlichungstag und Bekanntmachung des Hinweises auf die Patenterteilung: **27.01.2021**
(21) Anmeldenummer: 16809285.6
(22) Anmeldetag: 30.11.2016
(51) Int. Cl.: H04W 12/06, H04W 12/00, H04W 4/90, H04L 29/06

(54) **TEILNEHMERIDENTITÄTSMODUL MIT MEHREREN PROFILEN UND EINGERICHTET FÜR EIN AUTHENTICATE-KOMMANDO**
SUBSCRIBER IDENTITY MODULE WHICH HAS MULTIPLE PROFILES AND WHICH IS DESIGNED FOR AN AUTHENTICATION COMMAND
MODULE D'IDENTITÉ D'ABONNÉ À PROFILS MULTIPLES ET ADAPTÉ À UNE COMMANDE AUTHENTICATE

(30) Priorität: 01.12.2015 DE 102015015734
(43) Veröffentlichungstag der Anmeldung: 10.10.2018
(60) Teilanmeldung: 20020523.5
(73) Patentinhaber: Giesecke+Devrient Mobile Security GmbH, 81677 München (DE)
(72) Erfinder: HUBER, Ulrich, 81475 München (DE); NITSCH, Nils, 85570 Markt Schwaben (DE)
(86) Internationale Anmeldenummer: PCT/EP2016/002023
(87) Internationale Veröffentlichungsnummer: WO 2017/092868

(56) Entgegenhaltungen:
- US-A1- 2013 005 402
- US-A1- 2015 237 551
- Gsm Association: "Remote Provisioning Architecture for Embedded UICC Technical Specification Version 2.0", , 13. Oktober 2014 (2014-10-13), XP055262151, Gefunden im Internet: URL:http://www.gsma.com/connectedliving/wp -content/uploads/2014/10/SGP02-Remote-Prov isioning-Architecture-for-Embedded-UICC-Te chnical-Specification-v2.0.pdf [gefunden am 2016-04-01] in der Anmeldung erwähnt
- EUROPEAN TELECOMMUNICATIONS STANDARDS INSTITUTE (ETSI): "Smart cards; UICC-Terminal interface; Physical and logical characteristics (Release 4)", TECHNICAL SPECIFICATION ETSI TS 102 221 V4.16.0, 1. Juli 2007 (2007-07-01), XP014037570, in der Anmeldung erwähnt
- EUROPEAN TELECOMMUNICATIONS STANDARDS INSTITUTE (ETSI): "Smart Cards; Remote APDU structure for UICC based applications (Release 9)", TECHNICAL SPECIFICATION ETSI TS 102.226 V9.6.0, 1. Januar 2013 (2013-01-01), XP014092677,

## Beschreibung

### Gebiet der Erfindung

Die Erfindung betrifft ein Teilnehmeridentitätsmodul, umfassend mindestens zwei Subskriptions Profile, und eingerichtet, ein Authentisierungs-Kommando AUTHENTICATE zu empfangen und zu verarbeiten.

Zur Nutzung eines mobilen Endgeräts wie Smartphones oder Mobiltelefons in einem Mobilfunknetzwerk eines Netzbetreibers enthält das Endgerät ein Teilnehmeridentitätsmodul mit einem Subskriptions Profil oder auch einfach nur Profil. Das Subskriptions Profil ist durch einen Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI. Das Teilnehmeridentitätsmodul kann entweder als entfernbare Plug-In SIM-Karte (SIM = Subscriber Identity Module) oder USIM-Karte (Universal SIM) oder UICC (Universal Integrated Circuit Card) gestaltet sein, oder alternativ als festeingelötetes eUICC (embedded UICC) oder eSIM oder eUSIM.

### Stand der Technik

Mittlerweile werden auch Teilnehmeridentitätsmodule mit mehreren Subskriptions Profilen hergestellt. Um das Endgerät jederzeit eindeutig ansprechbar zu halten, ist bevorzugt zu jedem Zeitpunkt nur genau ein einziges Profil in einem aktiven "enabled" Zustand. Weitere im Teilnehmeridentitätsmodul enthaltene Profile sind in einem inaktiven "disabled" Zustand.

Das Dokument [1] SGP02-Remote-Provisioning-Architecture-for-Embedded-UICC-Technical-Specification-v2.0, 13 October 2014, GSMA beschreibt die Provisionierung oder - gleichbedeutend - Fernwartung von Profilen in einem Teilnehmeridentitätsmodul in Gestalt eines eUICC. Mittels Kommandos, die ein externer Server, nämlich der Sub Man Secure Router SM-SR, an eine privilegierte Instanz innerhalb des eUICC, nämlich die Issuer Security Domain Root ISD-R (ISD-Root), sendet, lassen sich im eUICC Funktionen zur Ausführung bringen. Hierdurch werden die Inhalte der Fernwartung im eUICC umgesetzt. [1] Kap. 3 beschreibt das Anlegen eines neuen Profils P in einem eUICC. Hierbei sendet der SM-SR an die im eUICC befindliche Root-Domain ISD-R ein Kommando zum Anlegen einer Issuer Security Domain ISD-P für das Profil P. Die Root-Domain veranlasst das Erzeugen ("create") der ISD-P. Die ISD-P wird mit einem ersten Schlüsselsatz personalisiert. Anschließend werden die Profildaten, also das eigentliche Profil, in das eUICC geladen. Mit einem anschließenden "enable"-Kommando vom SM-SR über die Root-Domain ISD-R an die Profil-Domain ISD-P kann das Profil aktiviert werden. Gemäß [1] Kap. 5.3.5 lässt sich mittels einer im eUICC ausgeführten Funktion "ProfileEnable" ein Profil im eUICC aktivieren, also in einen aktiven Zustand oder Status versetzen (schalten). Die "ProfileEnable" Funktion wird dadurch zur Ausführung gebracht, dass der Sub Man Secure Router SM-SR das entsprechende Kommando an die Security Domain ISD-R (ISD-Root) des eUICC sendet.

Für den normalen Betrieb hat der Nutzer des Endgeräts einen Vertrag mit einem Mobilfunk-Netzbetreiber und ein entsprechendes Profil des Netzbetreibers im Teilnehmeridentitätsmodul gespeichert. Normalbetrieb, beispielsweise Telefonate, SMS- und MMS-Austausch, Internet-Surfen etc. werden primär über das Mobilfunknetz des Netzbetreibers abgewickelt.

In speziellen Situationen der Nutzung eines Endgeräts, beispielsweise Notruf oder emergency Call "eCall", oder Gerätetest in der Fertigung, wäre es wünschenswert, andere, alternative Subskriptions Parameter zur Verfügung zu haben als für den normalen Betrieb des Endgeräts im Mobilfunknetz.

Die Parameter für die spezielle Situation sind in einem gesonderten alternativen Subskriptions Profil gespeichert. Herkömmlicherweise muss, um das alternative Profil nutzen zu können, ein Kommando "ProfileEnable" an das Teilnehmeridentitätsmodul gesendet werden, um das alternative Profil zu aktivieren. Im Anschluss wird für Verbindungen im Mobilfunknetz das Profil für die spezielle Situation genutzt. Nach Beendigung der speziellen Situation muss ein weiteres Kommando "ProfileEnable" an das Teilnehmeridentitätsmodul gesendet werden, um das Profil für den normalen Betrieb wieder zu aktivieren. Jede spezielle Situation erfordert somit zwei "ProfileEnable" Kommandos, um zweimal das aktive Profil umzuschalten.

Der Wunsch nach einem alternativen Profil kann auch dann aufkommen, wenn Eigentümer und Besitzer des Teilnehmeridentitätsmoduls voneinander abweichen. Eigentümer ist beispielsweise ein Endgeräte-Hersteller, späterer Besitzer ein Mobilfunk-Netzbetreiber.

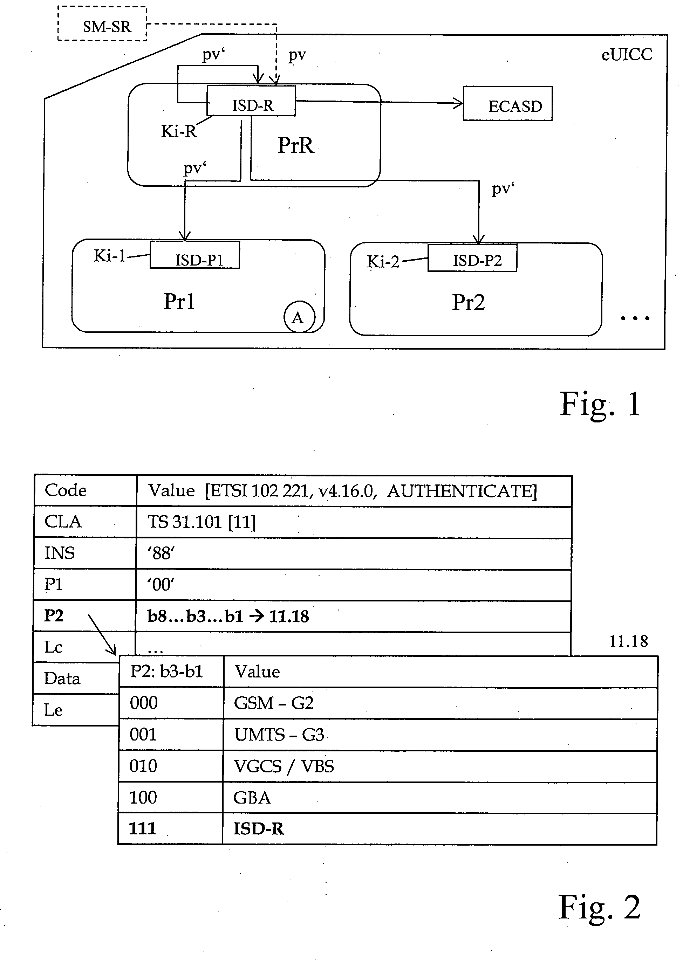

Das Dokument [2] ETSI 102 221 v4.16.0, 2007-07, ist eine Schnittstellenspezifikation für die Kommunikation zwischen einem UICC und einem Terminal. [2] definiert in Kapitel 11.1.16 das Kommando "AUHTENTICATE", durch welches das Terminal im UICC veranlasst, dass im UICC ausgehend von einem im UICC gespeicherten Geheimnis und einem vom Terminal empfangenen Challenge ein Authentisierungswert berechnet wird. Das Kommando "AUHTENTICATE" ist dazu eingerichtet mit den in Kapitel 11.1.16.2 angegebenen Parametern parametrisiert zu werden, unter anderem mit dem Netzwerkparameter P2. Durch den Netzwerkparameter P2 lässt sich eine Technologie - auch als Kontext bezeichnet - angeben, unter welche das zur Authentisierung verwendete Mobilfunknetzwerk fallen soll. Gemäß Tabelle 11.18, letzte Zeile sind bestimmte Werte der letzten fünf Bytes b5b4b3b2b1 des Netzwerk-Parameters P2 als Referenzierungsdaten vorgesehen (s. Fig. 2). Ein "AUTHENTICATE" Kommando mit einem der angegebenen Werte im Netzwerk-Parameter P2 führt zu einer Authentisierung für den entsprechenden Kontext, das heißt für ein Mobilfunknetzwerk unter der entsprechenden Technologie.

In der Zukunft werden Kraftfahrzeug-Hersteller verpflichtet sein, ihre Neuwagen mit einem Notrufsystem (eCall oder emergency Call) auszustatten, bei dem ein im Kraftfahrzeug installiertes eUICC oder allgemein M2M-Modul in einem Notfall automatisch einen Notruf über ein Mobilfunknetz absetzt. Evtl. ist für das Absetzen des Notrufs ein bestimmtes Mobilfunknetz vorgeschrieben. Dieses muss nicht mit dem Mobilfunknetz übereinstimmen, das der Halter des Kraftfahrzeugs selbst üblicherweise nutzt.

Hersteller von Endgeräten führen an ihren Fertigungsstätten für (neu hergestellte und für bereits im Feld befindliche) Endgeräte Geräte-Analyse-Tests durch, um eventuelle fehlerhafte Endgeräte zu identifizieren. Für einen solchen Geräte-Analyse-Test wird mittels eines Analyse-Geräts oder einer Analyse-Anlage ein Mobilfunk-Netzwerk simuliert, ein sogenanntes Test-Netzwerk. Zwischen dem betrachteten Endgerät und dem simulierten Test-Netzwerk wird eine Authentisierung mittels ETSI 102 221 AUTHENTICATE durchgeführt. Herkömmlicherweise entnimmt der Hersteller für den Geräte-Analyse-Test dem Endgerät die SIM-Karte und ersetzt sie durch eine Test-SIM, die für Authentisierung im simulierten Test-Netzwerk eingerichtet ist. Insbesondere enthält die Test-SIM einen Authentisierungs-Schlüssel, der dem simulierten Test-Netzwerk bekannt ist. Für festeingelötete eUICCs ist ein solcher SIM-Karten-Wechsel nicht möglich.

### Zusammenfassung der Erfindung

Die angeführten speziellen Situationen (eCall, Gerätetest) sind lediglich temporär. Das Profilumschalten mit "ProfileEnable" ist dagegen dauerhaft. Der Erfindung liegt die Aufgabe zu Grunde, ein Teilnehmeridentitätsmodul zu schaffen, das eine lediglich temporäre, vorübergehende Aktivierung eines alternativen Profils ermöglicht, und hierdurch ein Profilumschalten mit verringertem Aufwand ermöglicht.

Die Aufgabe wird gelöst durch ein Teilnehmeridentitätsmodul nach Anspruch 1. Vorteilhafte Ausgestaltungen der Erfindung sind in den abhängigen Ansprüchen angegeben.

Das erfindungsgemäße Teilnehmeridentitätsmodul nach Anspruch 1 umfasst Profile für die Nutzung eines mobilen Endgeräts in Mobilfunknetzwerken. Die Profile umfassen zumindest ein erstes Profil und mindestens ein zweites Profil. Hiervon ist das zweite Profil als aktives Profil eingerichtet. Das Teilnehmeridentitätsmodul ist weiter eingerichtet, ein mit einem Netzwerkparameter parametrisiertes Authentisierungs-Kommando zu empfangen und zu verarbeiten, und hierdurch Authentisierungsdaten für ein durch einen Netzwerk-Wert des Netzwerkparameters bestimmtes Mobilfunknetzwerk zu berechnen. Das Teilnehmeridentitätsmodul ist dadurch gekennzeichnet, dass das erste Profil als Root-Profil gestaltet ist, das in einem Normalzustand des Teilnehmeridentitätsmoduls in einem inaktiven Zustand ist, und das eingerichtet ist, in Reaktion auf ein beim Teilnehmeridentitätsmodul empfangenes Authentisierungs-Kommando, das mit einem für das Root-Profil spezifischen Root-Wert des Netzwerkparameters speziell parametrisiert ist, während eines Wechselzeitraums aktiviert zu werden. Dabei wird das zunächst aktive zweite Profil während des Wechselzeitraums deaktiviert. Nach Ablauf des Wechselzeitraums wird das erste Profil wieder deaktiviert und das zweite Profil wieder aktiviert.

Die Vorgänge des Deaktivierens des standardmäßig aktiven zweiten Profils, Aktivierens des ersten Profils (d.h. des Root-Profils), und nach Ablauf des Wechselzeitraums Wieder-Aktivierens des standardmäßigen zweiten Profils wird automatisch durch das speziell parametrisierte Authentisierungs-Kommando bewirkt, und ohne dass der Wechselzeitraum aktiv überwacht werden muss. Herkömmlicherweise wären für diesen erzielten Effekt vier Kommandos erforderlich, nämlich "DISABLE" zweites Profil, "ENABLE" erstes Profil und, nach Ablauf des Wechselzeitraum "DISABLE" erstes Profil, "ENABLE" zweites Profil, wobei zusätzlich der Wechselzeitraum aktiv überwacht werden muss.

Daher ist gemäß Anspruch 1 ein Teilnehmeridentitätsmodul geschaffen, das eine lediglich temporäre, vorübergehende Aktivierung eines alternativen Profils ermöglicht, und hierdurch ein Profilumschalten mit verringertem Aufwand ermöglicht.

Eine spezielle Situation kann beispielsweis ein Notfall sein, in welchem ein Notfall-Anruf, ein sogenannter eCall oder emergency call, über ein vorbestimmtes Netzwerk abgesetzt werden soll, das sich vom Netzwerk für den normalen Betrieb evtl. unterscheidet. Eine weitere spezielle Situation kann ein Gerätetest am Endgerät während der Fertigung des Endgeräts sein, wobei eine Verbindung in ein internes Testnetzwerk des Endgerät-Herstellers hergestellt werden soll, ohne dass kostenpflichtige Verbindungen zu Netzwerken von Mobilfunk-Netzbetreibern entstehen. Eine weitere spezielle Situation kann ein Service-Call sein, bei dem der Nutzer des Endgeräts einen Kundenservice-Server eines Dienstleisters anruft, und in Reaktion Dienstleistungen des Dienstleisters bereitgestellt bekommt, wie beispielsweise Beratung, Software-Download auf das Endgerät, oder dergleichen. Mit dem Erfindungsgemäßen speziell parametrisierten Authentisierungs-Kommando wird das aktive Profil vorübergehend, für die Dauer des Wechselzeitraums, umgeschaltet vom Standard-Profil (zweites Profil) auf beispielsweise ein Notruf-Profil (eCall-Profil) für ein Notruf-Netzwerk, oder auf ein Test-Profil für ein Testnetzwerk, oder auf ein Service-Profil für einen Service-Call.

Der Wechselzeitraum ist dabei auf die Dauer der Abarbeitung des Authentisierungs-Kommandos zeitlich begrenzt. Hierdurch wird, sobald das speziell parametrisierte Authentisierungs-Kommando abgearbeitet ist, automatisch wieder das standarmäßg aktive erste Profil aktiviert, und das Root-Profil zurück in den deaktivierten Zustand versetzt.

Als Wert des Netzwerkparameters ist wahlweise vorgesehen: P2=P3G (81) als Netzwerk-Wert für Netzwerk 3G, P2=P2G (80) als Netzwerk-Wert für Netzwerk 2G, ein von P2=P3G und P2=P2G und eventuellen weiteren Netzwerk-Werten unterschiedlicher, und vorzugsweise von weiteren vorbelegten Werten unterschiedlicher, Wert P2 = PR (z.B. FF) als Root-Wert für die vorübergehende Aktivierung des Root-Profils.

Wahlweise ist als Authentisierungs-Kommando ein APDU-Kommando, insbesondere ein AUTHENTICATE Kommando nach ETSI 102 221 vorgesehen, und als Parameter der Parameter P2.

Als erstes Profil ist wahlweise ein Profil eines Eigentümers des Teilnehmeridentitätsmoduls vorgesehen, insbesondere eines Endgeräte-Herstellers, und als zweites Profil ein Profil eines Besitzers des Teilnehmeridentitätsmoduls, insbesondere eines Netzbetreibers.

Als erstes Profil ist wahlweise eines der folgenden vorgesehen: ein Notfall-Profil zum Absetzen eines Notrufs in einer Notfallsituation in einem Notruf-Netzwerk; ein Test-Profil zum Durchführen eines Endgeräte-Tests in einem Test-Netzwerk; ein Service-Profil zum Anrufen eines Service-Netzwerks eines Service-Anbieters.

Das Profil umfasst wahlweise jeweils einen Authentisierungs-Schlüssel (z.B. Ki). Das Authentisierungs-Kommando ist wahlweise dazu eingerichtet, ausgehend vom Authentisierungs-Schlüssel des gerade aktiven Profils die Authentisierungsdaten zu berechnen.

Das Profil umfasst wahlweise jeweils eine Issuer Security Domain.

Wahlweise umfasst das Teilnehmeridentitätsmodul weiter eine Issuer Security Domain Root, die insbesondere als im Teilnehmeridentitätsmodul gelegener Endpunkt des zur Provisionierung des Teilnehmeridentitätsmoduls vorgesehenen Kanals zwischen dem Sub Man Secure Router und dem Teilnehmeridentitätsmodul eingerichtet ist. Wahlweise hat das erste Profil eine Issuer Security Domain, die identisch ist mit der Issuer Security Domain Root. In anderer Sichtweise ist im Teilnehmeridentitätsmodul nicht nur eine Issuer Security Domain Root, sondern ein ganzes Root-Profil angelegt.

### Kurze Beschreibung der Zeichnungen

Im Folgenden wird die Erfindung an Hand von Ausführungsbeispielen und unter Bezugnahme auf die Zeichnung näher erläutert, in der zeigen:
Fig. 1 ein Teilnehmeridentitätsmodul mit drei Profilen, gemäß einer Ausführungsform der Erfindung;
Fig. 2 Parameter des ETSI 102 221 AUTHENTICATE Kommandos, mit der erfindungsgemäßen erweiterten Parametrisierung.

### Detaillierte Beschreibung von Ausführungsbeispielen

Fig. 1 zeigt ein Teilnehmeridentitätsmodul eUICC mit drei Profilen PrR, Pr1, Pr2, gemäß einer Ausführungsform der Erfindung. Ein erstes Profil ist als Root-Profil PrR gestaltet und umfasst eine Issuer Security Domain Root ISD-R. Zwei zweite Profile Pr1 und Pr2 sind als gewöhnliche Subskriptions Profile gestaltet und umfassen jeweils eine Profil-spezifische Issuer Security Domain ISD-P1 bzw. ISD-P2. Es können noch weitere Profile im Teilnehmeridentitätsmodul eUICC enthalten sein. Profil Pr1 ist in Fig. 1 das (normalerweise) aktive Profil, wie durch das A in Kreis angedeutet ist. Weiter enthält das Teilnehmeridentitätsmodul eUICC ein mit der Issuer Security Domain Root ISD-R gekoppeltes embedded CASD, ECASD, in dem Zertifikate und Schlüssel für das Herunterladen (Download) von Profilen gespeichert sind.

Die Issuer Security Domain ISD-R des Root Profils PrR ist zugleich die Issuer Security Domain Root ISD-R, die als im Teilnehmeridentitätsmodul eUICC gelegener Endpunkt des zur Provisionierung des Teilnehmeridentitätsmoduls vorgesehenen Kanals zwischen dem Sub Man Secure Router SM-SR und dem Teilnehmeridentitätsmodul eUICC eingerichtet ist. Zur Provisionierung des eUICC sendet der SM-SR allgemein Provisionierungs-Kommandos pv an die Issuer Security Domain Root ISD-R. Die Issuer Security Domain Root ISD-R leitet die Provisionierungs-Kommandos pv weiter, in Fig. 1 dargestellt als pv', an die Issuer Security Domains ISD-P* der einzelnen Profile Pr*. Insbesondere provisioniert die Issuer Security Domain Root ISD-R also die Issuer Security Domains ISD-P1 und ISD-P2, aber auch sich selbst. Die Issuer Security Domain ISD-P1, ISD-P2, ISD-R enthält jeweils auch den Authentisierungsschlüssel Ki-1, Ki-2, Ki-R des Profils Pr1, Pr2 bzw. PrR. Insbesondere enthält also auch das Root-Profil PrR einen eigenen Authentisierungsschlüssel Ki-R, der im Root-Profil PrR genauer an die Issuer Security Domain Root ISD-R angebunden ist.

Fig. 2 zeigt eine Tabelle mit Parametern des ETSI 102 221 AUTHENTICATE Kommandos, mit der erfindungsgemäßen erweiterten Parametrisierung. Teil A der Tabelle aus Fig. 2 zeigt, neben anderen Parametern, den Netzwerk-Parameter P2 des AUTHENTICATE Kommandos, mit dem sich die verwendete Netzwerk-Technologie angeben lässt, und für den acht Bit b8...b3...b1 zur Verfügung stehen. Teil B der Tabelle zeigt übliche Werte für die letzten drei Bits b3...b1 des Netzwerk-Parameters P2. Folgende Codierung der letzten drei Bits b3b2b1 von P2 ist etabliert. Durch den Wert b3b2b1 = 000 GSM (2G) ist Kontext oder Technologie bezeichnet. Durch den Wert b3b2b1 = 001 ist UMTS (3G) Kontext oder Technologie bezeichnet. Durch den Wert b3b2b1 = 010 ist VGCS/VBS Kontext oder Technologie bezeichnet. Durch den Wert b3b2b1 = 100 ist GBA Kontext oder Technologie bezeichnet. Erfindungsgemäß wird der nicht als Netzwerk-Wert belegte Wert b3b2b1 = 111 dazu verwendet, ein vorübergehendes Schalten des aktiven Profils vom dauerhaft aktiven Profil Pr1 (oder ggf. Pr2) des Teilnehmeridentitätsmoduls eUICC zum Root-Profil PrR zu bewirken, für die Dauer der Abarbeitung des AUTHENTICATE Kommandos.

Trifft also beim Teilnehmeridentitätsmoduls eUICC das Kommando AUTHENTICATE mit dem Parameter-Wert P2 = **b3b2b1 = **111 (** steht für weitere Bits, die für die Erfindung nicht von Belang sind) beim Teilnehmeridentitätsmoduls eUICC ein, überträgt die Issuer Security Domain Root ISD-R den aktiven Status vom normalen Profil Pr1 auf das Root-Profil PrR. Anschließend berechnet das Teilnehmeridentitätsmoduls eUICC unter Verwendung des Authentisierungs-Schlüssels Ki-R der Root-Domain R, d.h. des Root-Profils PrR, Authentisierungsdaten. Sobald die Abarbeitung des AUTHENTICATE Kommandos angeschlossen ist, geht der aktive Status automatisch wieder vom Root-Profil auf das normale Profil Pr1 über.

### Zitierter Stand der Technik

[1] SGP02-Remote-Provisioning-Architecture-for-Embedded-UICC-Technical-Specification-v2.0, 13 October 2014, GSMA
[2] ETSI 102 221 v4.16.0, 2007-07

## Patentansprüche

1. Teilnehmeridentitätsmodul (eUICC),
- umfassend Profile für die Nutzung eines mobilen Endgeräts in Mobilfunknetzwerken, wobei die Profile zumindest ein erstes Profil und mindestens ein zweites Profil umfassen, wovon das zweite Profil (Pr1, Pr2) als aktives Profil eingerichtet ist,
- eingerichtet, ein mit einem Netzwerkparameter (P2) parametrisiertes Authentisierungs-Kommando (AUTHENTICATE) zu empfangen und zu verarbeiten, und hierdurch Authentisierungsdaten für ein durch einen Netzwerk-Wert des Netzwerkparameters (P2) bestimmtes Mobilfunknetzwerk zu berechnen,
**dadurch gekennzeichnet, dass**
das erste Profil als Root-Profil (PrR) gestaltet ist, das in einem Normalzustand des Teilnehmeridentitätsmoduls in einem inaktiven Zustand ist, und das eingerichtet ist, in Reaktion auf ein beim Teilnehmeridentitätsmodul empfangenes Authentisierungs-Kommando (AUTHENTICATE), das mit einem für das Root-Profil (PrR) spezifischen Root-Wert (FF; b3b2b1=111; ...) des Netzwerkparameters (P2) speziell parametrisiert ist, während eines Wechselzeitraums aktiviert zu werden, wobei das zunächst aktive zweite Profil (Pr1, Pr2) während des Wechselzeitraums deaktiviert wird, und wobei nach Ablauf des Wechselzeitraums das erste Profil (PrR) wieder deaktiviert und das zweite Profil (Pr1, Pr2) automatisch wieder aktiviert wird, wobei der Wechselzeitraum auf die Dauer der Abarbeitung des speziell parametrisierten Authentisierungs-Kommandos zeitlich begrenzt ist.

2. Teilnehmeridentitätsmodul nach Anspruch 1, wobei als Wert des Netzwerkparameters (P2) vorgesehen ist: P2=P3G (81) als Netzwerk-Wert für Netzwerk 3G, P2=P2G (80) als Netzwerk-Wert für Netzwerk 2G, ein von P2=P3G und P2=P2G und eventuellen weiteren Netzwerk-Werten unterschiedlicher, und vorzugsweise von weiteren vorbelegten Werten unterschiedlicher, Wert P2 = PR (FF) als Root-Wert für die vorübergehende Aktivierung des Root-Profils.

3. Teilnehmeridentitätsmodul nach einem der Ansprüche 1 bis 2, wobei als Authentisierungs-Kommando ein APDU-Kommando, insbesondere ein AUTHENTICATE Kommando nach ETSI 102 221 vorgesehen ist.

4. Teilnehmeridentitätsmodul nach einem der Ansprüche 1 bis 3, wobei als erstes Profil ein Profil eines Eigentümers des Teilnehmeridentitätsmoduls, insbesondere eines Endgeräte-Herstellers, vorgesehen ist und als zweites Profil ein Profil eines Besitzers des Teilnehmeridentitätsmoduls, insbesondere eines Netzbetreibers, vorgesehen ist.

5. Teilnehmeridentitätsmodul nach einem der Ansprüche 1 bis 4, wobei als erstes Profil eines der folgenden vorgesehen ist: ein Notfall-Profil zum Absetzen eines Notrufs in einer Notfallsituation in einem Notruf-Netzwerk; ein Test-Profil zum Durchführen eines Endgeräte-Tests in einem Test-Netzwerk; ein Service-Profil zum Anrufen eines Service-Netzwerks eines Service-Anbieters.

6. Teilnehmeridentitätsmodul nach einem der Ansprüche 1 bis 5, wobei das Profil (P) jeweils einen Authentisierungs-Schlüssel (Ki) umfasst, und wobei das Authentisierungs-Kommando (AUTHENTICATE) dazu eingerichtet ist, ausgehend vom Authentisierungs-Schlüssel (Ki-1, Ki-2, Ki-R) des gerade aktiven Profils (Pr1, Pr2, PrR) die Authentisierungsdaten zu berechnen.

7. Teilnehmeridentitätsmodul nach einem der Ansprüche 1 bis 6, wobei das Profil (Pr1, Pr2, PrR) jeweils eine Issuer Security Domain (ISD-P1, ISD-P2, ISD-R) umfasst.

8. Teilnehmeridentitätsmodul nach einem der Ansprüche 1 bis 7, das weiter eine Issuer Security Domain Root (ISD-R) umfasst, die insbesondere als im Teilnehmeridentitätsmodul gelegener Endpunkt des zur Provisionierung des Teilnehmeridentitätsmoduls vorgesehenen Kanals zwischen dem Sub Man Secure Router (SM-SR) und dem Teilnehmeridentitätsmodul eingerichtet ist, und wobei das erste Profil eine Issuer Security Domain (ISD-R) hat, die identisch ist mit der Issuer Security Domain Root (ISD-R).

## Claims

1. A subscriber identity module (eUICC),
- comprising profiles for the utilization of a mobile terminal in mobile communication networks, wherein the profiles comprise at least a first profile and at least a second profile, of which the second profile (Pr1, Pr2) is devised as an active profile,
- devised to receive and to process an authentication command (AUTHENTICATE) parameterized with a network parameter (P2), and as a result of this to compute authentication data for a mobile communication network determined by a network value of the network parameter (P2),
**characterized in that**
the first profile is designed as a root profile (PrR) which in a normal state of the subscriber identity module is in an inactive state, and which is devised to be activated, in response to an authentication command (AUTHENTICATE) received at the subscriber identity module, said authentication command being specially parameterized with a root value (FF; b3b2b1=111; ...) of the network parameter (P2), specific to the root profile (PrR), during a change-over period, wherein the initially active second profile (Pr1, Pr2) is deactivated during the change-over period, and wherein after the end of the change-over period, the first profile (PrR) is again deactivated and the second profile (Pr1, Pr2) is again automatically activated, wherein the change-over period is limited in time to the duration of the processing of the specifically parameterized authentication command.

2. The subscriber identity module according to claim 1, wherein as a value of the network parameter (P2) there is provided: P2=P3G (81) as a network value for network 3G, P2=P2G (80) as a network value for network 2G, a value P2 = PR (FF) different from P2=P3G and P2=P2G possibly further network values and preferably different from further pre-allocated values as a root value for the transient activation of the root profile.

3. The subscriber identity module according to any of claims 1 to 2, wherein an APDU command is provided as an authentication command, in particular a command AUTHENTICATE according to ETSI 102 221.

4. The subscriber identity module according to any of claims 1 to 3, wherein as first profile a profile of an owner of the subscriber identity module is provided, in particular of an end-device manufacturer, and as second profile a profile of an owner of the subscriber identity module is provided, in particular of a network provider.

5. The subscriber identity module according to any of claims 1 to 4, wherein as first profile one of the following is provided: an emergency profile for outputting an emergency call in an emergency situation in an emergency call network; a test profile for carrying out an end-device test on a test network; a service profile for calling a service network of a service provider.

6. The subscriber identity module according to any of claims 1 to 5, wherein the profile (P) comprises respectively an authentication key (Ki), and wherein the authentication command (AUTHENTICATE) is devised for computing, originating from the authentication key (Ki-1, Ki-2, Ki-R) of the currently active profile (Pr1, Pr2, PrR), the authentication data.

7. The subscriber identity module according to any of claims 1 to 6, wherein the profile (Pr1, Pr2, PrR) comprises respectively an Issuer Security Domain (ISD-P1, ISD-P2, ISD-R).

8. The subscriber identity module according to any of claims 1 to 7, which further comprises an Issuer Security Domain Root (ISD-R) which is devised in particular as an end point situated in the subscriber identity module of the channel provided for provisioning the subscriber identity module between the Sub Man Secure Router (SM-SR) and the subscriber identity module, and wherein the first profile has an Issuer Security Domain (ISD-R) which is identical to the Issuer Security Domain Root (ISD-R).

## Revendications

1. Module d'identité d'abonné (eUICC),
- comprenant des profils pour l'utilisation d'un terminal mobile dans des réseaux radio mobiles, cependant que les profils comprennent au moins un premier profil et au moins un deuxième profil, dont le deuxième profil (Pr1, Pr2) est configuré en tant que profil actif,
- configuré pour recevoir et traiter une commande d'authentification (AUTHENTICATE) paramétrée avec un paramètre de réseau (P2), et pour calculer par cela des données d'authentification pour un réseau radio mobile déterminé par une valeur de réseau du paramètre de réseau (P2),
**caractérisé en ce que**
le premier profil est conçu en tant que profil Root (PrR) qui, à un état normal du module d'identité d'abonné, est dans un état inactif, et qui est configuré pour, en réaction à une commande d'authentification (AUTHENTICATE) reçue au module d'identité d'abonné, spécialement paramétrée avec une valeur Root (FF; b3b2b1=111; ...), spécifique du profil Root (PrR), du paramètre de réseau (P2), être activé pendant un laps de temps de changement, cependant que le deuxième profil (Pr1, Pr2) tout d'abord actif est désactivé pendant le laps de temps de changement, et cependant que, après écoulement du laps de temps de changement, le premier profil (PrR) est à nouveau désactivé et le deuxième profil (Pr1, Pr2) est automatiquement à nouveau activé, cependant que le laps de temps de changement est limité dans le temps pour la durée de l'exécution de la commande d'authentification spécialement paramétrée.

2. Module d'identité d'abonné selon la revendication 1, cependant que, en tant que valeur du paramètre de réseau (P2), il est prévu: P2=P3G (81) en tant que valeur de réseau pour réseau 3G, P2=P2G (80) en tant que valeur de réseau pour réseau 2G, une valeur P2 = PR (FF), différente de P2=P3G et de P2=P2G et éventuellement d'autres valeurs de réseau, et de préférence différente d'autres valeurs déjà affectées, en tant que valeur Root pour l'activation temporaire du profil Root.

3. Module d'identité d'abonné selon une des revendications de 1 à 2, cependant que, en tant que commande d'authentification, une commande APDU, en particulier une commande AUTHENTICATE suivant ETSI 102 221, est prévue.

4. Module d'identité d'abonné selon une des revendications de 1 à 3, cependant que, en tant que premier profil, un profil d'un propriétaire du module d'identité d'abonné, en particulier d'un fabricant de terminaux, est prévu, et que, en tant que deuxième profil, un profil d'un détenteur du module d'identité d'abonné, en particulier d'un opérateur de réseau, est prévu.

5. Module d'identité d'abonné selon une des revendications de 1 à 4, cependant que, en tant que premier profil, un des suivants est prévu : un profil d'urgence pour l'émission d'un appel d'urgence dans une situation d'urgence dans un réseau d'urgence ; un profil de test pour l'accomplissement d'un test de terminaux dans un réseau de test ; un profil de service pour l'appel d'un réseau de services d'un fournisseur de services.

6. Module d'identité d'abonné selon une des revendications de 1 à 5, cependant que le profil (P) comprend respectivement une clé d'authentification (Ki), et cependant que la commande d'authentification (AUTHENTICATE) est configurée pour, à partir de la clé d'authentification (Ki-1, Ki-2, Ki-R,) du profil actuellement actif (Pr1, Pr2, PrR), calculer les données d'authentification.

7. Module d'identité d'abonné selon une des revendications de 1 à 6, cependant que le profil (Pr1, Pr2, PrR) comprend respectivement un Issuer Security Domain (ISD-P1, ISD-P2, ISD-R).

8. Module d'identité d'abonné selon une des revendications de 1 à 7, lequel comprend en outre une Issuer Security Domain Root (ISD-R) qui est en particulier configurée en tant que point final, situé dans le module d'identité d'abonné, du canal prévu pour le provisionnement du module d'identité d'abonné entre le Sub Man Secure Router (SM-SR) et le module d'identité d'abonné, et cependant que le premier profil a un Issuer Security Domain (ISD-R) qui est identique à la Issuer Security Domain Root (ISD-R).
